(19) Europäisches Patentamt
European Patent Office
Office européen des brevets

(11) EP 4 657 590 A1

(12) EUROPEAN PATENT APPLICATION
published in accordance with Art. 153(4) EPC

(43) Date of publication:
**03.12.2025 Bulletin 2025/49**

(21) Application number: **24793080.3**

(22) Date of filing: **19.04.2024**

(51) International Patent Classification (IPC):
***H01M 10/0567*** *(2010.01)* ***H01M 10/0569*** *(2010.01)*
***H01M 4/38*** *(2006.01)* ***H01M 10/052*** *(2010.01)*
***H01M 4/134*** *(2010.01)* ***H01M 4/02*** *(2006.01)*

(52) Cooperative Patent Classification (CPC):
Y02E 60/10

(86) International application number:
**PCT/KR2024/005354**

(87) International publication number:
**WO 2024/219896 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.04.2023 KR 20230052976**

(71) Applicant: **LG Energy Solution, Ltd.**
**Seoul 07335 (KR)**

(72) Inventors:
- **CHO, Yoon Gyo**
  **Daejeon 34122 (KR)**
- **LEE, Jung Min**
  **Daejeon 34122 (KR)**
- **LEE, Chul Haeng**
  **Daejeon 34122 (KR)**
- **LEE, Kyung Mi**
  **Daejeon 34122 (KR)**
- **BAEK, Ga Young**
  **Daejeon 34122 (KR)**
- **JI, Su Hyeon**
  **Daejeon 34122 (KR)**
- **YEOM, Chul Eun**
  **Daejeon 34122 (KR)**

(74) Representative: **Hoffmann Eitle**
**Patent- und Rechtsanwälte PartmbB**
**Arabellastraße 30**
**81925 München (DE)**

# (54) NON-AQUEOUS ELECTROLYTE AND LITHIUM SECONDARY BATTERY COMPRISING SAME

(57) The present disclosure relates to a non-aqueous electrolyte comprising a lithium salt, an organic solvent, and an additive, wherein the additive includes a cyclic siloxane compound represented by a specific Formula.

EP 4 657 590 A1

## Description

## [TECHNICAL FIELD]

### Cross-reference to Related Applications

This application claims priority from Korean Patent Application No. 10-2023-0052976, filed on April 21, 2023, the disclosures of which are incorporated by reference herein.

### Technical Field

The present disclosure relates to a non-aqueous electrolyte and a lithium secondary battery comprising the same.

## [BACKGROUND ART]

There is a need to develop technology for efficiently storing and utilizing electrical energy as personal IT devices and computer networks are developed with the recent development of information society and the accompanying dependency of society as a whole on the electrical energy is increased.

A secondary battery is a technology that is most suitable for various applications among developed technologies, and among the secondary batteries, a lithium secondary battery, which may be miniaturized to be applicable to a personal IT device and has the highest energy density, is in the spotlight.

Generally, lithium secondary batteries are prepared by injecting or impregnating a non-aqueous electrolyte into an electrode assembly comprising a positive electrode, a negative electrode, and a porous separator.

The uses of lithium-containing cobalt oxides, $LiMnO_2$ having a layered crystal structure, $LiMn_2O_4$ having a spinel crystal structure, lithium-containing nickel oxides ($LiNiO_2$), and lithium nickel-cobalt-manganese transition metal oxides are under consideration as the positive electrode active material of such a lithium secondary battery.

Meanwhile, carbon-based active materials such as graphite have been used as the negative electrode active material, but recently, the use of silicon-based active materials is being under consideration in terms of having a higher capacity than carbon-based active materials.

While the silicon-based active material has the advantage of having a high capacity, it has the problem of having a very large expansion/contraction in the volume during charging and discharging processes. This large degree of the volume expansion/contraction significantly reduces the conductivity of the negative electrode, causing a decrease in life performance. In addition, a Solid Electrolyte Interface layer (hereinafter "SEI layer") is formed on the surface of the negative electrode during an initial activation, but silicon-based active materials have a large volume expansion degree, causing problems such as cracking of the SEI film and continuous generation of new negative electrode surfaces. As a result, there is a problem of accelerating the side reactions of the electrolyte due to the continuously occurring reactions of forming the SEI film. The thickness of the SEI film also increases, leading to an increase in the resistance.

## [DISCLOSURE OF THE INVENTION]

## [TECHNICAL PROBLEM]

One object of the present disclosure is to provide a non-aqueous electrolyte capable of achieving a lithium secondary battery with improved lifespan and storage performance by forming an SEI film with excellent recovery and improved durability on the negative electrode to solve the above problems.

## [TECHNICAL SOLUTION]

The present disclosure provides a non-aqueous electrolyte comprising a lithium salt, an organic solvent, and an additive, wherein the additive includes a compound represented by the following Formula 1.

[Formula 1]

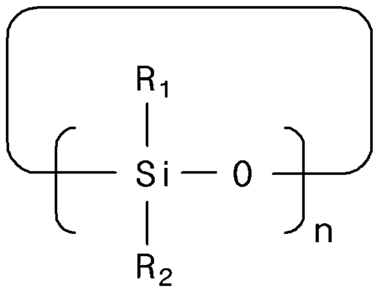

In Formula 1 above, $R_1$ and $R_2$ are each independently F, Br, Cl, I, a nitrile group, an ester group, an ether group, a ketone group, a carboxyl group, a substituted or unsubstituted alkyl group having 1 to 10 carbon atoms, a substituted or unsubstituted alkenyl group having 1 to 10 carbon atoms, a substituted or unsubstituted alkynyl group having 1 to 10 carbon atoms, a substituted or unsubstituted alkoxy group having 1 to 10 carbon atoms, a boron group, a borate group, an isocyanate group, an isothiocyanate group, a silyl group, a siloxane group, a sulfone group, a sulfonate group, a sulfate group, a substituent represented by the following Formula 2, or a combination of two or more thereof, at least one of $R_1$ and $R_2$ includes a substituent represented by the following Formula 2, and n is an integer of 3 to 8.

[Formula 2]

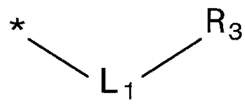

In Formula 2 above, $L_1$ is an alkylene group having 1 to 10 carbon atoms, an ester group,a sulfone group, a sulfonate group, a sulfate group, or a combination of two or more thereof, $R_3$ is an alkoxy group having 1 to 10 carbon atoms in which one or more fluorines are substituted, and * is a binding site.

In addition, the present disclosure provides a lithium secondary battery comprising a negative electrode; a positive electrode facing the negative electrode; a separator interposed between the negative electrode and the positive electrode; and the above-mentioned non-aqueous electrolyte.

**[ADVANTAGEOUS EFFECTS]**

The non-aqueous electrolyte according to the present disclosure is characterized by including a cyclic siloxane compound with a specific structure containing an alkoxy group in which one or more Fs are substituted as additives. The above compound is capable of forming a polymer-type siloxane SEI film when reduced at the negative electrode, and this polymer-type siloxane SEI film has a high shear modulus and may contribute to the formation of an SEI film with excellent thermal stability and chemical and electrochemical stability. In addition, the alkoxy group in which one or more Fs are substituted contained in the cyclic siloxane compound can improve the durability of the SEI film by enabling the formation of an inorganic SEI film such as LiF upon reduction at the negative electrode. In particular, since the alkoxy group is a good leaving group, it can strongly induce SEI film-forming reactions. Accordingly, the lithium secondary battery comprising the non-aqueous electrolyte according to the present disclosure may be capable of improving lifespan performance and storage performance, especially at high temperatures.

**[MODE FOR CARRYING OUT THE INVENTION]**

It will be understood that terms or words used in the present specification and claims shall not be construed as being limited to having meanings defined in commonly used dictionaries, but should be interpreted as having meanings and concepts consistent with the technical idea of the present disclosure based on the principle that an inventor may appropriately define concepts of the terms to best explain the disclosure.

It should be appreciated that the terms such as "including", "comprising", or "having" as used herein are intended to embody specific features, numbers, steps, elements, and/or combinations thereof, and does not exclude existence or addition of other specific features, numbers, steps, elements, and/or combinations thereof.

Before describing the present disclosure, "*" denotes the same or different atom or a portion connected between ends of a formula (bonding site) unless explicitly stated otherwise.

Before describing the present invention, the expressions "a" and "b" in the description of "a to b carbon atoms" in the specification each denote the number of carbon atoms included in a specific functional group. That is, the functional group may include "a" to "b" carbon atoms. For example, "an alkyl group having 1 to 5 carbon atoms" denotes an alkyl group containing 1 to 5 carbon atoms, i.e., $CH_3$-, $CH_3CH_2$-, $CH_3CH_2CH_2$-, $(CH_3)_2CH$-, $CH_3CH_2CH_2CH_2$-, $(CH_3)_2CHCH_2$-, $CH_3CH_2CH_2CH_2CH_2$-, $(CH_3)_2CHCH_2CH_2$-, and the like.

Also, in the present specification, an alkyl group or an aryl group may be substituted or unsubstituted. Unless otherwise defined in the specification, the expression "substitution" denotes that at least one hydrogen bonded to carbon is substituted with an element other than hydrogen, for example, an alkyl group having 1 to 20 carbon atoms, an alkenyl group with 2 to 20 carbon atoms, an alkynyl group with 2 to 20 carbon atoms, an alkoxy group with 1 to 20 carbon atoms, a cycloalkyl group with 3 to 12 carbon atoms, a cycloalkenyl group with 3 to 12 carbon atoms, a cycloalkynyl group with 3 to 12 carbon atoms, a heterocycloalkyl group with 3 to 12 carbon atoms, a heterocycloalkenyl group with 3 to 12 carbon atoms, a heterocycloalkynyl group with 2 to 12 carbon atoms, an aryloxy group with 6 to 12 carbon atoms, a halogen atom, a fluoroalkyl group with 1 to 20 carbon atoms, a nitro group, an aryl group with 6 to 20 carbon atoms, a heteroaryl group with 2 to 20 carbon atoms, a haloaryl group with 6 to 20 carbon atoms, etc.

Hereinafter, the present disclosure will be described in more detail.

## Non-Aqueous Electrolyte

The present disclosure relates to a non-aqueous electrolyte.

Specifically, the non-aqueous electrolyte according to the present disclosure comprises a lithium salt, an organic solvent and an additive, wherein the additive includes a compound represented by the following Formula 1.

[Formula 1]

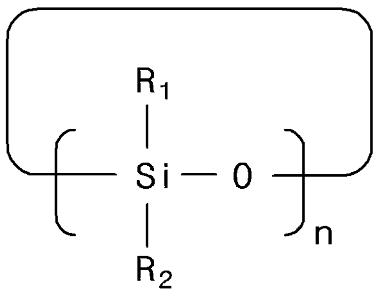

In Formula 1 above, $R_1$ and $R_2$ are each independently F, Br, Cl, I, a nitrile group, an ester group, an ether group, a ketone group, a carboxyl group, a substituted or unsubstituted alkyl group having 1 to 10 carbon atoms, a substituted or unsubstituted alkenyl group having 1 to 10 carbon atoms, a substituted or unsubstituted alkynyl group having 1 to 10 carbon atoms, a substituted or unsubstituted alkoxy group having 1 to 10 carbon atoms, a boron group, a borate group, an isocyanate group, an isothiocyanate group, a silyl group, a siloxane group, a sulfone group, a sulfonate group, a sulfate group, a substituent represented by the following Formula 2, or a combination of two or more thereof, at least one of $R_1$ and $R_2$ includes a substituent represented by the following Formula 2, and n is an integer of 3 to 8.

[Formula 2]

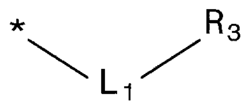

In Formula 2 above, $L_1$ is an alkylene group having 1 to 10 carbon atoms, an ester group,a sulfone group, a sulfonate group, a sulfate group, or a combination of two or more thereof, $R_3$ is an alkoxy group having 1 to 10 carbon atoms in which one or more fluorines are substituted, and * is a binding site.

**(1) Lithium Salt**

As the lithium salt used in the present disclosure, any lithium salt typically used in an electrolyte solution for a lithium secondary battery may be used without limitation, and, for example, the lithium salt may include $Li^+$ as a cation, and may include at least one selected from the group consisting of $F^-$, $Cl^-$, Br, $I^-$, $NO_3^-$, $N(CN)_2^-$, $BF_4^-$, $ClO_4^-$, $AlO_4^-$, $AlCl_4^-$, $PF_6^-$, $SbF_6^-$, $AsF_6^-$, $B_{10}Cl_{10}^-$, $BF_2C_2O_4^-$, $BC_4O_8^-$, $PF_4C_2O_4^-$, $PF_2C_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(FSO_2)_2N^-$, $CF_3CF_2(CF_3)_2CO^-$, $(CF_3SO_2)_2CH^-$, $CH_3SO_3^-$, $CF_3(CF_2)_7SO_3^-$, $CF_3CO_2^-$, $CH_3CO_2^-$, $SCN^-$and $(CF_3CF_2SO_2)_2N^-$ as an anion.

Specifically, the lithium salt may include at least one selected from the group consisting of LiCl, LiBr, LiI, $LiBF_4$, $LiClO_4$, $LiAlO_4$, $LiAlCl_4$, $LiPF_6$, $LiSbF_6$, $LiAsF_6$, $LiB_{10}Cl_{10}$, LiBOB ($LiB(C_2O_4)_2$), $LiCF_3SO_3$, LiFSI ($LiN(SO_2F)_2$), $LiCH_3SO_3$, $LiCF_3CO_2$, $LiCH_3CO_2$ and LiBETI ($LiN(SO_2CF_2CF_3)_2$). Specifically, the lithium salt may include at least one selected from the group consisting of $LiBF_4$, $LiClO_4$, $LiPF_6$, LiBOB ($LiB(C_2O_4)_2$), $LiCF_3SO_3$, LiTFSI ($LiN(SO_2CF_3)_2$), LiFSI (($LiN(SO_2F)_2$) and LiBETI ($LiN(SO_2CF_2CF_3)_2$).

The lithium salt may be appropriately changed in a normally usable range, but may be present in a concentration of 0.5M to 5.0M, specifically, 0.8M to 4.0M and more specifically, 0.8M to 2.0M in the electrolyte solution. In the case in which the concentration of the lithium salt satisfies the above range, this may improve the Li+ transference number and the degree of dissociationof lithium ions,thereby improving the output characteristics of the battery.

**(2) Organic Solvent**

The organic solvent is a non-aqueous solvent commonly used in lithium secondary batteries, and is not limited as long as decomposition due to an oxidation reaction or the like during the charging and discharging of the battery can be minimized.

Specifically, the organic solvent may include at least one organic solvent selected from a cyclic carbonate-based organic solvent, a linear carbonate-based organic solvent, a linear ester-based organic solvent and a cyclic ester-based organic solvent.

Specifically, the organic solvent may include a cyclic carbonate-based organic solvent, a linear carbonate-based organic solvent or a mixture thereof.

The cyclic carbonate-based organic solvent is an organic solvent having high viscosity and a high dielectric constant, and thus, is an organic solvent capable of dissociating a lithium salt well in an electrolyte, and specific examples thereof may include at least one organic solvent selected from ethylene carbonate (EC), fluoroethylene carbonate (FEC), propylene carbonate (PC), 1,2-butylene carbonate, 2,3-butylene carbonate, 1,2-pentylene carbonate, 2,3-pentylene carbonate, and vinylene carbonate. More specifically, the cyclic carbonate-based organic solvent may include at least one selected from the group consisting of ethylene carbonate (EC) and fluoroethylene carbonate (FEC), and more specifically, it may include fluoroethylene carbonate (FEC) in terms of contributing to the formation of an inorganic (LiF)-containing SEI film.

In addition, the linear carbonate-based organic solvent is an organic solvent having low viscosity and a low dielectric constant, specifically may include at least one organic solvent selected from dimethyl carbonate (DMC), diethyl carbonate (DEC), dipropyl carbonate, ethylmethyl carbonate (EMC), methylpropyl carbonate, and ethylpropyl carbonate, and more specifically, may include at least one selected from ethylmethyl carbonate (EMC) and diethyl carbonate (DEC). More specifically, diethyl carbonate (DEC) may be included in terms of further improving the oxidation stability of the non-aqueous electrolyte.

The organic solvent may be a mixture of a cyclic carbonate-based organic solvent and a linear carbonate-based organic solvent, wherein the cyclic carbonate-based organic solvent and the linear carbonate-based organic solvent may be mixed in a volume ratio of 5:95 to 40:60, specifically 7:93 to 25:75. When the mixing ratio of the cyclic carbonate-based organic solvent and the linear carbonate-based organic solvent satisfies the above range, the high dielectric constant and low viscosity characteristics can be simultaneously satisfied, and excellent ionic conductivity characteristics can be achieved.

In addition, to prepare an electrolyte with a high ionic conductivity, the organic solvent may further include at least one ester-based organic solvent selected from a linear ester-based organic solvent and a cyclic ester-based organic solvent in addition to at least one carbonate-based organic solvent selected from a cyclic carbonate-based organic solvent and a linear carbonate-based organic solvent.

The linear ester-based organic solvent may include at least one selected from methyl acetate, ethyl acetate, propyl acetate, methyl propionate, ethyl propionate, propyl propionate, and butyl propionate.

In addition, the cyclic ester-based organic solvent may include at least one selected from $\gamma$-butyrolactone, $\gamma$-valerolactone, $\gamma$-caprolactone, $\sigma$-valerolactone, and $\varepsilon$-caprolactone.

Meanwhile, the organic solvent may be used by adding organic solvents commonly used in non-aqueous electrolytes without limitation, if necessary. For example, it may further include at least one organic solvent selected from

an ether-based organic solvent, a glyme-based solvent, and a nitrile-based organic solvent.

Any one selected from dimethyl ether, diethyl ether, dipropyl ether, methylethyl ether, methylpropyl ether, ethylpropyl ether, 1,3-dioxolane (DOL), and 2,2-bis (trifluoromethyl )-1,3-dioxolane (TFDOL), and a mixture of two or more thereof may be used as the ether-based solvent, but is not limited thereto.

The glyme-based solvent has a high dielectric constant and low surface tension compared to linear carbonate-based organic solvents, and may include at least one selected from dimethoxyethane (glyme, DME), diethoxyethane, digylme, triglyme, and tetra-glyme (TEGDME) as a solvent with low reactivity with metals, but is not limited thereto.

The nitrile-based solvent may include one or more selected from acetonitrile, propionitrile, butyronitrile, valeronitrile, caprylonitrile, heptanenitrile, cyclopentanecarbonitrile, cyclohexanecarbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, but is not limited thereto.

**(3)Additive**

The non-aqueous electrolyte includes an additive.

The additive includes a compound represented by the following Formula 1.

[Formula 1]

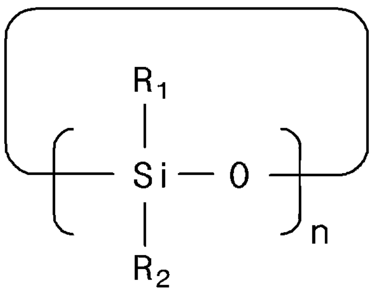

In Formula 1 above, $R_1$ and $R_2$ are each independently F, Br, Cl, I, a nitrile group, an ester group, an ether group, a ketone group, a carboxyl group, a substituted or unsubstituted alkyl group having 1 to 10 carbon atoms, a substituted or unsubstituted alkenyl group having 1 to 10 carbon atoms, a substituted or unsubstituted alkynyl group having 1 to 10 carbon atoms, a substituted or unsubstituted alkoxy group having 1 to 10 carbon atoms, a boron group, a borate group, an isocyanate group, an isothiocyanate group, a silyl group, a siloxane group, a sulfone group, a sulfonate group, a sulfate group, a substituent represented by the following Formula 2, or a combination of two or more thereof, at least one of $R_1$ and $R_2$ includes a substituent represented by the following Formula 2, and n is an integer of 3 to 8.

[Formula 2]

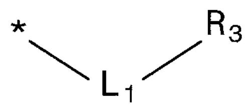

In Formula 2 above, $L_1$ is an alkylene group having 1 to 10 carbon atoms, an ester group,a sulfone group, a sulfonate group, a sulfate group, or a combination of two or more thereof, $R_3$ is an alkoxy group having 1 to 10 carbon atoms in which one or more fluorines are substituted, and * is a binding site.

The compound represented by Formula 1 above is characterized in being a cyclic siloxane compound wherein $R_1$ and/or $R_2$ substituted on Si is/are an alkoxy group having 1 to 10 carbon atoms in which one or more Fs are substituted and specifically include(s) a substituent represented by Formula 2.

In the case where the compound represented by Formula 1 above is used as a non-aqueous electrolyte additive, the cyclic siloxane structure is ring-opened when reduced at the negative electrode, thereby forming a polymer-type siloxane SEI film. This polymer-type siloxane SEI film not only has excellent flexibility and recovery, but also has a high shear modulus and has excellent thermal, chemical, and electrochemical stability.

In addition, the compound represented by Formula 1 above contains a substituent represented by Formula 2 above, and the substituent is reduced at the negative electrode to form an inorganic SEI film containing an inorganic

material such as LiF. This inorganic SEI film can significantly improve the durability of the SEI film. In particular, the compound represented by Formula 1 according to the present disclosure forms the polymer-type/inorganic composite SEI film described above, so the durability, flexibility, and stability of the SEI film can be improved simultaneously.

In addition, the substituent ($R_1$ and/or $R_2$) included in the compound represented by Formula 1 above is characterized by including a fluorine-substituted alkoxy group, and specifically a substituent represented by Formula 2 above. The fluorine-substituted alkoxy group is a somewhat weak electron withdrawn group and functions as a good leaving group. This can induce and promote the formation of inorganic SEI films such as LiF.

According to the above mentioned effects, the non-aqueous electrolyte according to the present disclosure enables the improvement of the lifespan performance and storage performance of lithium secondary batteries, in particular at high temperatures. In particular, the compound represented by Formula 1 above can be more preferably applied to a negative electrode using a silicon-based active material. Li of lithiated Si formed due to the activation of a negative electrode containing a silicon-based active material and F derived from the compound represented by Formula 1 above may have a strong interaction with each other (Glue effect), and so it can be more advantageous for forming a durable and resilient SEI film on silicon-based active materials with an extreme volume expansion during charging and discharging.

In Formula 1 above, $R_1$ and $R_2$ are each independently F, Br, Cl, I, a nitrile group, an ester group, an ether group, a ketone group, a carboxyl group, a substituted or unsubstituted alkyl group having 1 to 10 carbon atoms, a substituted or unsubstituted alkenyl group having 1 to 10 carbon atoms, a substituted or unsubstituted alkynyl group having 1 to 10 carbon atoms, a substituted or unsubstituted alkoxy group having 1 to 10 carbon atoms, a boron group, a borate group, an isocyanate group, an isothiocyanate group, a silyl group, a siloxane group, a sulfone group, a sulfonate group, a sulfate group, a substituent represented by the following Formula 2, or a combination of two or more thereof, and at least one of $R_1$ and $R_2$ includes a substituent represented by the following Formula 2.

[Formula 2]

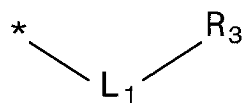

In Formula 2 above, $L_1$ is an alkylene group having 1 to 10 carbon atoms, an ester group,a sulfone group, a sulfonate group, a sulfate group, or a combination of two or more thereof, $R_3$ is an alkoxy group having 1 to 10 carbon atoms in which at least fluorine is substituted, and * is a binding site.

Specifically, in terms of preventing a decrease in the reactivity due to a steric hindrance, either $R_1$ or $R_2$ may include a substituent represented by Formula 2 above. For example, in Formula 1, $R_1$ may include a substituent represented by Formula 2 above, and $R_2$ may not include a substituent represented by Formula 2 above. Specifically, when $R_1$ includes a substituent represented by Formula 2 above in Formula 1, $R_2$ may be an alkyl group having 1 to 5 carbon atoms, more specifically may be an ethyl group or methyl group, and even more specifically may be a methyl group.

In Formula 2 above, $L_1$ is an alkylene group having 1 to 10 carbon atoms, an ester group,a sulfone group, a sulfonate group, a sulfate group, or a combination of two or more thereof, $R_3$ is an alkoxy group having 1 to 10 carbon atoms in which at least fluorine is substituted, and * is a binding site.

In Formula 2 above, $L_1$ may specifically be an alkylene group having 1 to 10 carbon atoms, a sulfone group, or a combination thereof, more specifically, it may be an alkylene group having 1 to 5 carbon atoms, and even more specifically, it may be a methylene group or an ethylene group in that it is easy to receive electrons, which can further improve reducing properties for being easy to receive electrons upon the reduction of the negative electrode.

In Formula 2 above, $R_3$ may be an alkoxy group having 1 to 10 carbon atoms in which one or more Fs are substituted, specifically an alkoxy group having 1 to 5 carbon atoms in which one or more Fs are substituted, more specifically one selected from $-OCF_3$, $-OCF_2CF_3$ and $-OCF_2CF_2CF_3$, and even more specifically, it may be $-OCF_3$ in terms of preventing a decrease in the reactivity due to a steric hindrance.

In Formula 1 above, n may be an integer from 3 to 8, specifically it may be an integer of 3 or 4, and more specifically it may bean integer of 3. When n is 3 to 8, $R_1$ and/or $R_2$ in each repeating unit may be the same or different from each other.

Specifically, the compound represented by Formula 1 above may include at least one selected from the group consisting of compounds represented by the following Formula 1-1, Formula 1-2, Formula 1-3, Formula 1-4, Formula 1-5, Formula 1-6, Formula 1-7, Formula 1-8, Formula 1-9, Formula 1-10, Formula 1-11 and Formula 1-12, more specifically it may include at least one selected from the group consisting of compounds represented by the following Formula 1-1, Formula 1-3, Formula 1-9 and Formula 1-10, more specifically it may include at least one selected from the group consisting of compounds represented by the following Formula 1-1 and Formula 1-3, and even more specifically it may include the compound represented by Formula 1-1.

[Formula 1-1]

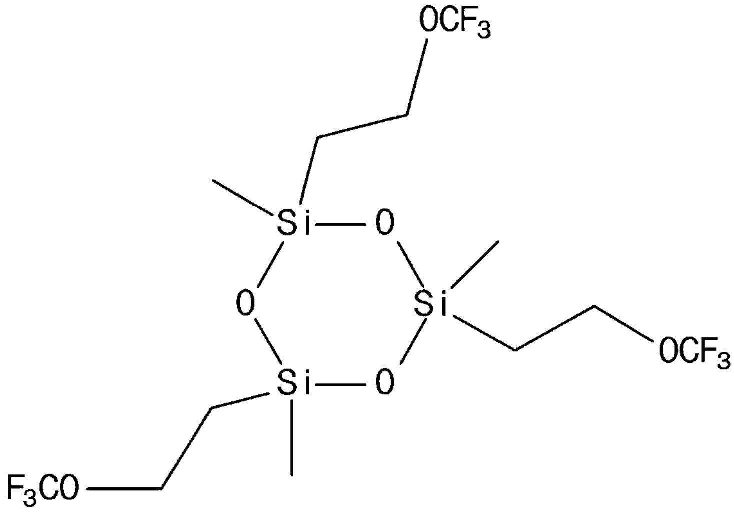

[Formula 1-2]

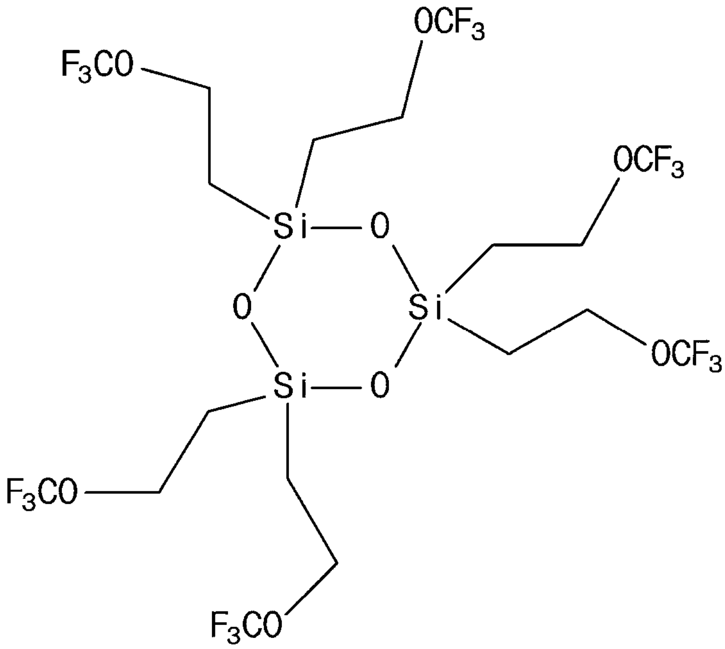

[Formula 1-3]

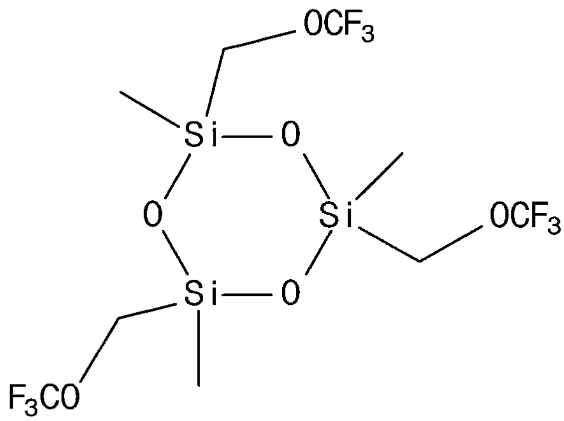

[Formula 1-4]

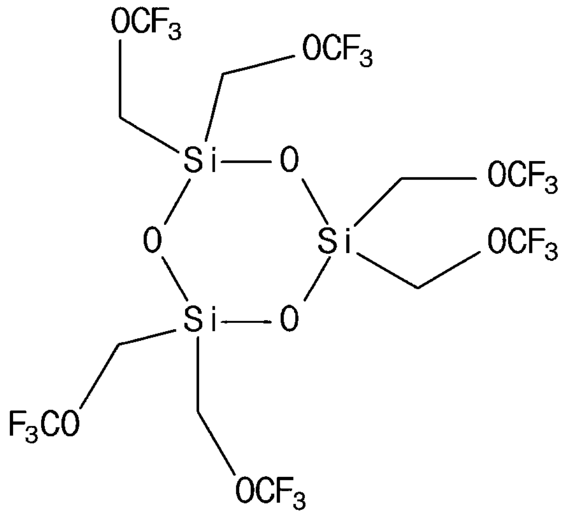

[Formula 1-5]

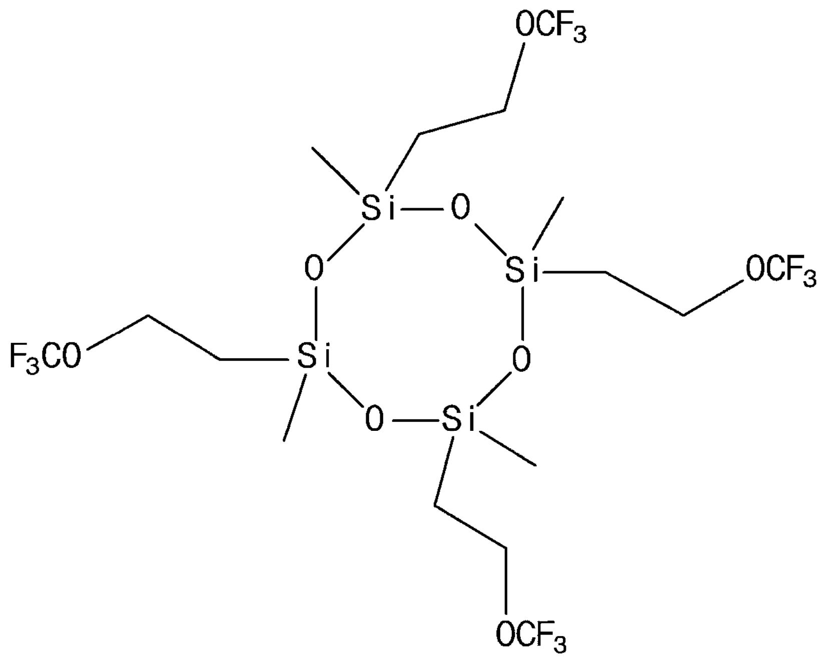

[Formula 1-6]

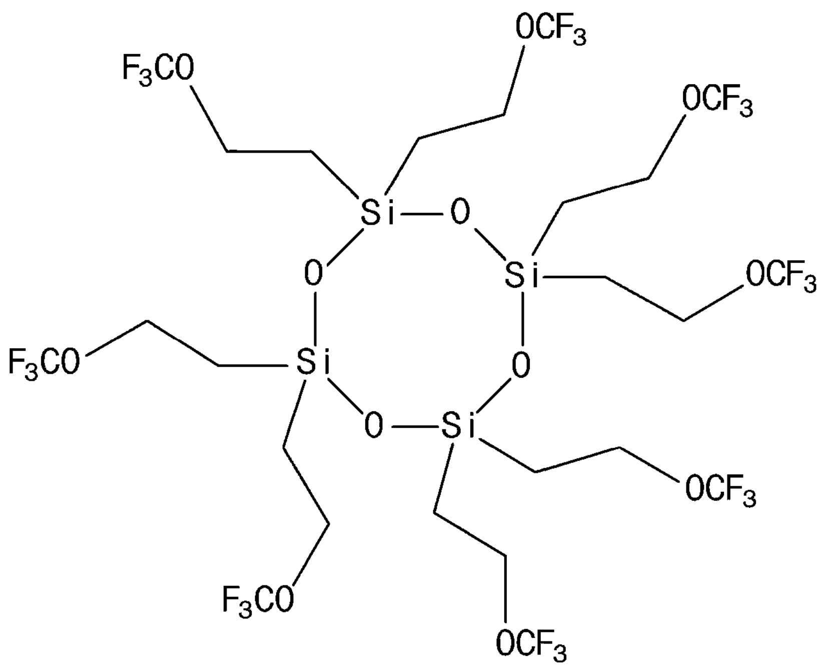

[Formula 1-7]

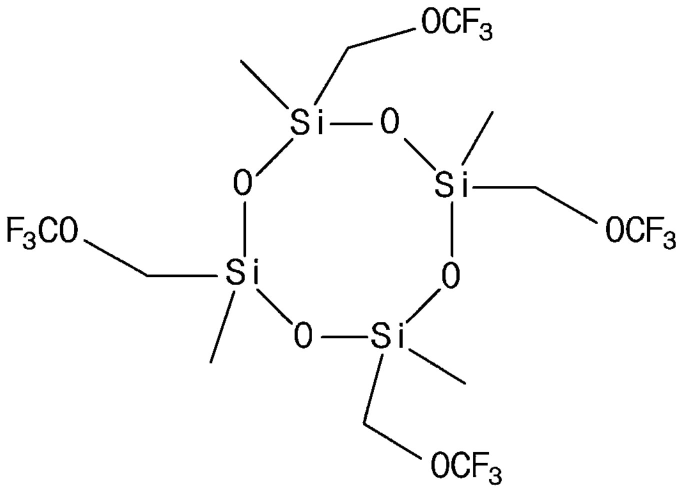

[Formula 1-8]

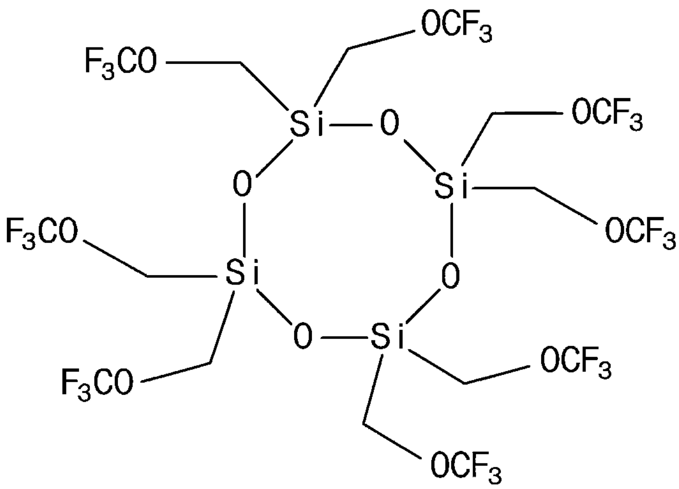

[Formula 1-9]

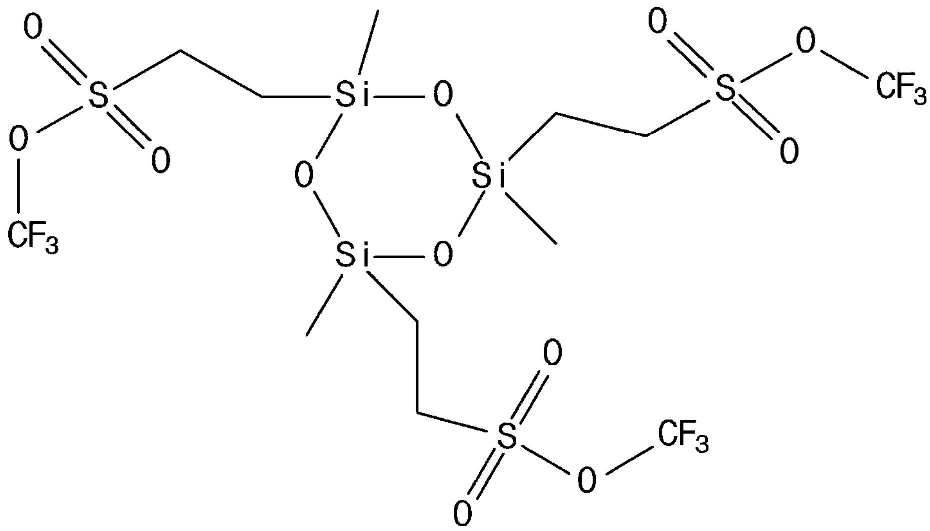

[Formula 1-10]

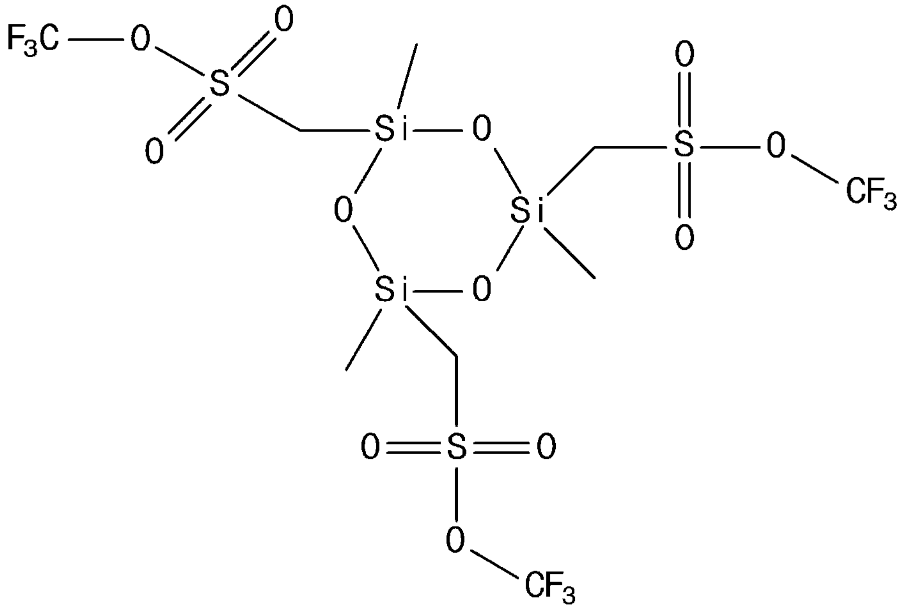

[Formula 1-11]

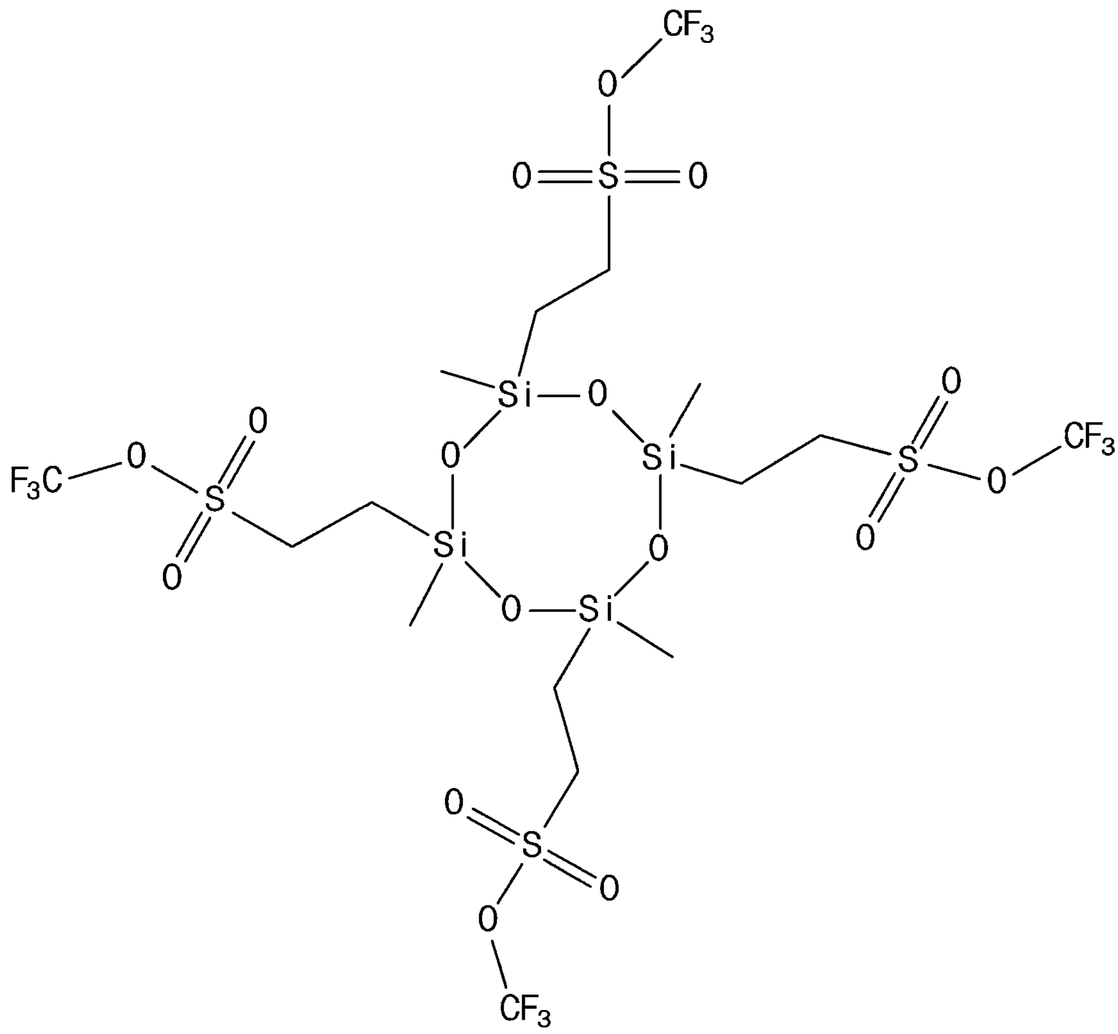

[Formula 1-12]

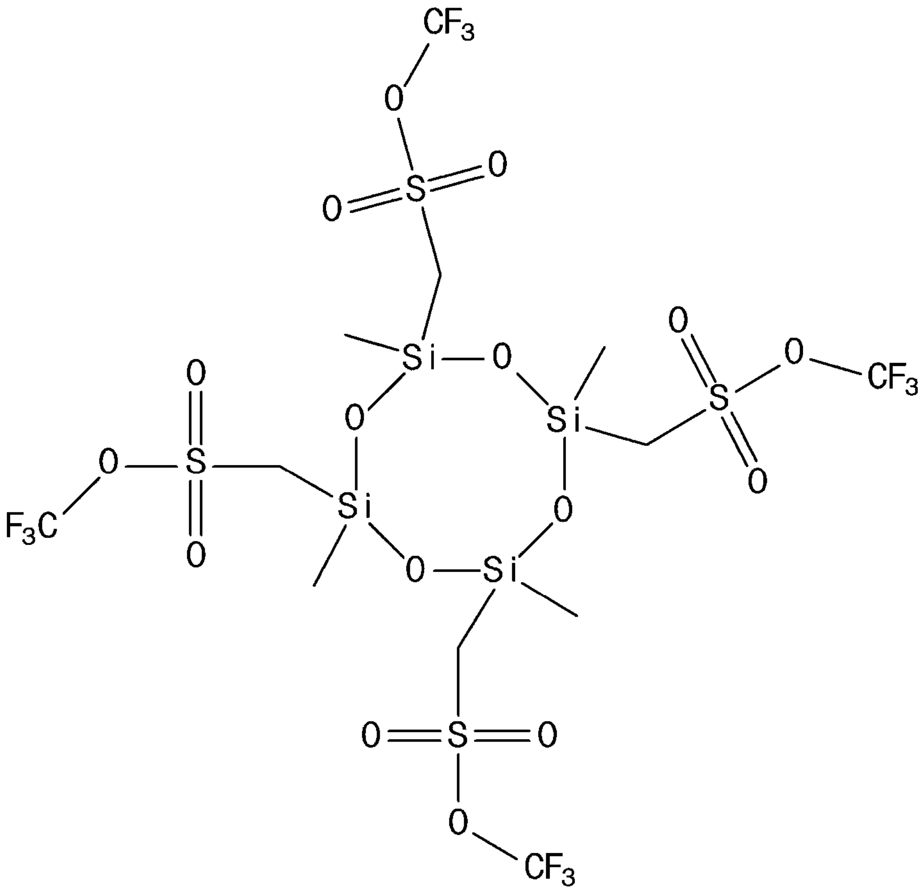

The compound represented by Formula 1 above may be included in an amount of 0.01 wt% to 10 wt%, specifically 0.3 wt% to 7 wt%, more specifically 0.5 wt% to 5 wt%, and even more specifically 1 wt% to 3 wt% based on the weight of the non-aqueous electrolyte. When the compound represented by Formula 1 above is used in the above content ranges, an increase in the resistance when added in excess can be prevented while a flexible and highly durable SEI film can be formed on the negative electrode.

The additive may further include an additional additive along with the compound represented by Formula 1. The additional additive may be included in the non-aqueous electrolyte to prevent the non-aqueous electrolyte from being decomposed to cause collapse of the negative electrode in a high output environment, or further improve low-temperature high-rate discharge characteristics, high-temperature stability, overcharge protection, and a battery swelling suppression effect at high temperatures.

Specifically, the additional additive may include at least one selected from the group consisting of lithium difluorophosphate (LiDFP), vinylene carbonate, vinyl ethylene carbonate, fluoroethylene carbonate, propane sultone, propene sultone, succinonitrile, Adiponitrile, ethylene sulfate, LiBOB(Lithium bis-(oxalato)borate), TMSPa (3-trimethoxysilanyl-propyl-N-aniline), and TMSPi (Tris(trimethylsilyl) Phosphite).

The additional additive may be included in an amount of 0.1 wt% to 15 wt%, and more specifically 0.3 wt% to 3.0 wt% in the non-aqueous electrolyte.

When the non-aqueous electrolyte further includes the above additional additive, the weight ratio of the compound represented by Formula 1 above and the additional additive may be 45:55 to 99:1, specifically 50:50 to 95:5, and more specifically 70:30 to 85:15. When the ratio is within the above ranges, the life performance and storage performance at high temperatures can be improved to a more desirable level.

## Lithium secondary battery

In addition, the present disclosure provides a lithium secondary battery comprising the above-mentioned non-aqueous electrolyte.

Specifically, the lithium secondary battery according to the present disclosure includes a negative electrode, a positive electrode facing the negative electrode, a separator interposed between the negative electrode and the positive electrode, and the above-described non-aqueous electrolyte.

After an electrode assembly, in which the negative electrode, the positive electrode facing the negative electrode,

and separator interposed between the negative electrode and the positive electrode are included, is accommodated in a battery case, the lithium secondary battery may be prepared by injecting the non-aqueous electrolyte thereto.

Since the non-aqueous electrolyte has been described above, the negative electrode, positive electrode, and separator will be described below.

### (1) Negative electrode

The negative electrode may include a negative electrode active material.

Any negative electrode active materials used in the art may be used as the negative electrode active material without limitation. The negative electrode active material may include at least one selected from a silicon-based active material and a carbon-based active material, and more specifically, it may include silicon-based active materials.

Although the silicon-based active material exhibits a higher capacity than the carbon-based active material, there is a problem that the degree of volume expansion/contraction due to charging and discharging is large. However, when the silicon-based active material and the above-described non-aqueous electrolyte are used together, it is possible to form an SEI film with improved flexibility and durability on the negative electrode, thereby preventing electrolyte side reactions and achieving a lithium secondary battery with a high lifespan performance.

The silicon-based active material may include a compound represented by the following Formula A.

[Formula A] $SiO_x (0 \leq x < 2)$

In Formula A, $SiO_2$ may not react with lithium ions and thus not store lithium. Therefore, it is preferable that x is within the above range. More specifically, the silicon-based active material may be Si.

The average particle diameter ($D_{50}$) of the silicon-based active material may be 1 μm to 20 μm.

The carbon-based active material may include at least one selected from graphite, hard carbon, soft carbon, carbon black, graphene, and fibrous carbon, and may preferably include graphite. The graphite may include at least one selected from artificial graphite and natural graphite.

The average particle diameter ($D_{50}$) of the carbon-based active material may be 10μm to 30 μm, and preferably 15μm to 25μm in terms of ensuring the structural stability during charging and discharging and reducing side reactions with an electrolyte solution.

The negative electrode may include a negative electrode current collector and a negative electrode active material layer disposed on at least one surface of the negative electrode current collector, wherein the negative electrode active material may be included in the negative electrode active material layer.

The negative electrode current collector is not particularly limited so long as it has a high conductivity without causing adverse chemical changes in the battery. Specifically, the negative electrode current collector may include at least one selected from copper, stainless steel, aluminum, nickel, titanium, sintered carbon, copper or stainless steel that is surface-treated with one of carbon, nickel, titanium, silver, or the like, and an aluminum-cadmium alloy.

The negative electrode current collector may have a thickness of 3 μm to 500 μm.

The negative electrode current collector may have microscopic irregularities formed on the surface thereof to enhance the adhesion of the negative electrode active material. For example, the negative electrode current collector may be used in various shapes such as a film, a sheet, a foil, a net, a porous body, a foam body, and a nonwoven fabric body.

The negative electrode active material layer is disposed on at least one surface of the negative electrode current collector. Specifically, the negative electrode active material layer may be disposed on one surface or both surfaces of the negative electrode current collector.

The negative electrode active material may be included in an amount of 60 wt% to 99 wt% in the negative electrode active material layer in terms of exhibiting the sufficient capacity in the secondary battery while minimizing the impact of the volume expansion/contraction on the battery.

The negative electrode active material layer may further include a conductive agent together and/or a binder with the silicon-based active material.

The binder may be used to improve the adhesion between the negative electrode active material layer and the negative electrode current collector as described later, or the binding force between the silicon-based active materials.

Specifically, the binder may include at least one selected from styrene butadiene rubber (SBR), nitrile butadiene rubber(NBR), acrylonitrile butadiene rubber, acrylic rubber, butyl rubber, fluoro rubber, polyvinyl alcohol, carboxymethyl cellulose (CMC), starch, hydroxypropyl cellulose, regenerated cellulose, polyvinyl alcohol (PVA), polyacrylic acid (PAA), polyethylene glycol (PEG), polyacrylonitrile (PAN), and polyacryl amide (PAM), in terms of further improving electrode adhesion and providing sufficient resistance to the volume expansion/contraction of the silicon-based active material.

The binder may be included in an amount of 1 wt% to 30 wt% in the negative electrode active material layer. When the amount is within the range, the binder may better bind the negative electrode active materials to minimize the problem of the volume expansion of the active material, and at the same time, the binder may be easily dispersed, and the coating

properties and phase stability of the slurry may be improved when a slurry for forming the negative electrode active material layer is prepared.

The conductive agent is not particularly limited so long as it can be used to assist and improve conductivity in the secondary battery and has conductivity without causing adverse chemical changes. Specifically, the conductive agent may include at least one selected from graphite such as natural graphite or artificial graphite; carbon black such as carbon black, acetylene black, Ketjen black, channel black, furnace black, lamp black or thermal black; a conductive fiber such as a carbon fiber or a metal fiber; a conductive tube such as a carbon nanotube; fluorocarbon; metal powder such as aluminum or nickel powder; a conductive whisker such as a zinc oxide whisker or a potassium titanate whisker; a conductive metal oxide such as a titanium oxide; and a polyphenylene derivative.

The conductive agent may be included in an amount of 1 wt% to 20 wt% in the negative electrode active material layer, and when the amount of the conductive agent is within the range, it is preferable in terms of being able to form an excellent conductive network while alleviating an increase in the resistance due to the binder.

The negative electrode active material layer may have a thickness of 5 $\mu$m to 500 $\mu$m, and preferably 5 $\mu$m to 100 $\mu$m.

The negative electrode may be prepared by coating the negative electrode current collector with a negative electrode slurry including a negative electrode active material, and optionally a binder, a conductive agent, and a solvent for forming a negative electrode slurry, followed by drying and roll-pressing.

The solvent for forming a negative electrode slurry may include, for example, at least one selected from distilled water, ethanol, methanol, and isopropyl alcohol, preferably distilled water, in terms of facilitating the dispersion of the negative electrode active material, the binder and/or the conductive agent.

### (2) Positive Electrode

The positive electrode includes a positive electrode active material.

The positive electrode active material is a compound capable of reversible intercalation and de-intercalation of lithium, and specifically may include a lithium transition metal composite oxide including lithium and at least one transition metal selected from a group consisting of nickel, cobalt, manganese, and aluminum, and preferably may include a lithium transition metal composite oxide including lithium and a transition metal including nickel, cobalt, and manganese.

For example, the lithium transition metal composite oxide may include lithium-manganese-based oxide (e.g., $LiMnO_2$, $LiMn_2O_4$, etc.), lithium-cobalt-based oxide (e.g., $LiCoO_2$, etc.), lithium-nickel-based oxide (e.g., $LiNiO_2$, etc.), lithium-nickel-manganese-based oxide (e.g., $LiNi_{1-Y}Mn_YO_2$ (where 0<Y<1), $LiMn_{2-z}Ni_zO_4$ (where 0<Z<2), etc.), lithium-nickel-cobalt-based oxide (e.g., $LiNi_{1-Y1}Co_{Y1}O_2$(where 0<Y1<1), etc.), lithium-manganese-cobalt-based oxide (e.g., $LiCo_{1-Y2}Mn_{Y2}O_2$ (where 0<Y2<1), $LiMn_{2-z1}Co_{z1}O_4$(where 0<Z1<2), etc.), lithium-nickel-manganese-cobalt-based oxide (e.g., $Li(Ni_pCo_qMn_{r1})O_2$ (where 0<p<1, 0<q<1, 0<r1<1, and p+q+r1=1) or $Li(Ni_{p1}Co_{q1}Mn_{r2})$ $O_4$ (where 0<p1<2, 0<q1<2, 0<r2<2, and p1+q1+r2=2), etc.), or lithium-nickel-cobalt-transition metal (M) oxide (e.g., $Li(Ni_{p2}Co_{q2}Mn_{r3}M_{s2})O_2$ (where M is selected from the group consisting of Al, Fe, V, Cr, Ti, Ta, Mg and Mo, and p2, q2, r3 and s2 are atomic fractions of each independent elements, wherein 0 < p2 < 1, 0 < q2 < 1, 0 < r3 < 1, 0 < s2 < 1, and p2+q2+r3+s2=1), etc.), and any one thereof or a compound of two or more thereof may be included. Among these materials, in terms of being able to improve the capacity characteristics and stability of the battery, the lithium transition metal composite oxide may include $LiCoO_2$, $LiMnO_2$, $LiNiO_2$, lithium nickel manganese cobalt oxide (e.g., $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$ or $Li(Ni_{0.8}Mn_{0.1}Co_{0.1})O_2$, etc.), or lithium nickel cobalt aluminum oxide (e.g., $Li(Ni_{0.8}Co_{0.15}Al_{0.05})O_2$ ,etc.).In consideration of the significant effect of improvement resulting from the control of the types and content ratios of the components constituting the lithium transition metal composite oxide, the lithium transition metal composite oxide may be $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, $Li(Ni_{0.8}Mn_{0.1}Co_{0.1})O_2$, or the like, and any one thereof or a mixture of two or more thereof may be used.

More specifically, the positive electrode active material may be a lithium transition metal composite oxide, and may contain 60 mol% or more of nickel, based on the total number of the moles of transition metals included in the lithium transition metal composite oxide. Specifically, the positive electrode active material is a lithium transition metal composite oxide, and the transition metal includes nickel, and at least one selected from manganese, cobalt, or aluminum, and may include nickel in an amount of 60 mol% or more, specifically 60 mol% to 90 mol%, based on the total number of the moles of the transition metal. When the lithium transition metal composite oxide using such a high nickel content is used together with the above-described non-aqueous electrolyte solution, it is preferable in terms of being able to reduce by-products in the gas phase generated by the structural collapse.

In addition, the positive electrode active material may include a lithium composite transition metal oxide represented by the following Formula B:

[Formula B] $Li_{1+x}(Ni_aCo_bMn_cM_d)O_2$

In Formula B, M is at least one selected from W, Cu, Fe, V, Cr, Ti, Zr, Zn, Al, In, Ta, Y, La, Sr, Ga, Sc, Gd, Sm, Ca, Ce, Nb, Mg, B and Mo, and 1+x, a, b, c and d are each independent atomic fractions of elements, wherein $0 \leq x \leq 0.2$, $0.50 \leq a < 1$, $0 < b \leq 0.25$, $0 < c \leq 0.25$, $0 \leq d \leq 0.1$, and $a+b+c+d=1$.

Preferably, a, b, c and d may be $0.70 \leq a \leq 0.95$, $0.025 \leq b \leq 0.20$, $0.025 \leq c \leq 0.20$, and $0 \leq d \leq 0.05$, respectively.

Preferably, a, b, c and d may be $0.80 \leq a \leq 0.95$, $0.025 \leq b \leq 0.15$, $0.025 \leq c \leq 0.15$, and $0 \leq d \leq 0.05$, respectively.

In addition, a, b, c and d may be $0.85 \leq a \leq 0.90$, $0.05 \leq b \leq 0.10$, $0.05 \leq c \leq 0.10$, and $0 \leq d \leq 0.03$, respectively.

The positive electrode may include a positive electrode current collector and a positive electrode active material layer disposed on at least one surface of the positive electrode current collector, wherein the positive electrode active material layer may include the above-mentioned positive electrode active material.

The positive electrode current collector may typically have a thickness of 3 μm to 500 μm.

The positive electrode current collector may have microscopic irregularities formed on the surface thereof to enhance the adhesion of a positive electrode active material. For example, the positive electrode current collector may be used in various shapes such as a film, a sheet, a foil, a net, a porous body, a foam body, and a nonwoven fabric body.

The positive electrode active material layer may be disposed on at least one surface of the positive electrode current collector. Specifically, the positive electrode active material layer may be disposed on one surface or both surfaces of the positive electrode current collector.

The positive electrode active material may be included in an amount of 80 wt% to 99 wt% in the positive electrode active material layer in consideration of exhibiting the sufficient capacity of the positive electrode active material.

The positive electrode active material layer may further include a binder and/or a conductive agent together with the positive electrode active material as described above.

The binder is a component that assists in the binding between the active material and the conductive agent and in the binding with the current collector, and specifically may include at least one selected from polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene terpolymer (EPDM), a sulfonated EPDM, a styrene-butadiene rubber, and a fluoro rubber, and preferably include polyvinylidenefluoride.

The binder may be included in an amount of 1 wt% to 20 wt%, and preferably, 1.2 wt% to 10 wt% in the positive electrode active material layer in terms of securing a sufficient binding force between components such as positive electrode active materials.

The conductive agent may be used to assist and improve conductivity in the secondary battery, and is not particularly limited as long as it has conductivity without causing chemical changes. Specifically, the positive electrode conductive agent may include at least one selected from graphite such as natural graphite or artificial graphite; carbon black, such as carbon black, acetylene black, Ketjen black, channel black, furnace black, lamp black, and summer black; conductive fibers such as carbon fibers and metal fibers; conductive tubes such as carbon nanotubes; fluorocarbons; metal powders such as aluminum and nickel powder; conductive whiskers such as zinc oxide and potassium titanate; conductive metal oxides such as titanium oxide; and polyphenylene derivatives, and preferably may include carbon nanotubes for the purpose of improving conductivity.

The conductive agent may be included in an amount of 1 wt% to 20wt%, preferably 1.2 wt% to 10 wt%, in the positive electrode active material layer in terms of sufficiently securing electrical conductivity.

The thickness of the positive electrode active material layer may be 5μm to 500 μm, preferably 20 μm to 200 μm.

The positive electrode may be prepared by coating the positive electrode current collector with a positive electrode slurry including a positive electrode active material, and optionally a binder, a conductive agent, and a solvent for forming a positive electrode slurry, followed by drying and roll-pressing.

### (3) Separator

The separator is interposed between the positive electrode and the negative electrode.

A porous polymer film typically used as the separator, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer may be used alone or in a lamination therewith as the separator. Also, a typical porous nonwoven fabric, for example, a nonwoven fabric formed of high melting point glass fibers or polyethylene terephthalate fibers may be used, but is not limited thereto. A coated separator containing a ceramic component or a polymer material may also be used to secure heat resistance or a mechanical strength, and the separator having a single layer or multilayer structure may be selectively used.

A shape of the lithium secondary battery of the present disclosure is not particularly limited, but a cylindrical type using a can, a prismatic type, a pouch type, or a coin type may be used.

Hereinafter, the present disclosure will be described in detail, according to specific examples. However, the following examples are merely presented to exemplify the present disclosure, and the scope of the present disclosure is not limited thereto. It will be apparent to those skilled in the art that various modifications and alterations are possible within

the scope and technical spirit of the present disclosure, and such modifications and alterations fall within the scope of claims included herein.

## Examples and Comparative Examples

### Example 1

(Non-aqueous Electrolyte Preparation)

An organic solvent, in which fluoroethylene carbonate (FEC) and diethyl carbonate (DEC) were mixed in a volume ratio of 10:90 was used.

A non-aqueous electrolyte was prepared by adding $LiPF_6$ as a lithium salt, a compound represented by Formula 1-1 above and lithium difluorophosphate (LiDFP) as additives to the organic solvent.

$LiPF_6$ was included in a molar concentration of 1.5 M in the non-aqueous electrolyte.

The compound represented by the following Formula 1-1 was included in an amount of 2 wt% in the non-aqueous electrolyte, and lithium difluorophosphate was included in an amount of 0.5 wt% in the non-aqueous electrolyte.

(Secondary Battery Preparation)

A positive electrode active material ($Li[Ni_{0.85}Co_{0.05}Mn_{0.07}Al_{0.03}]O_2$), a conductive agent (carbon nanotube), and a binder (polyvinylidene fluoride) were added to N-methyl-2-pyrrolidone (NMP), which is a solvent, at a weight ratio of 97.74:0.70:1.56 to prepare a positive electrode mixture slurry (solid content: 75.5wt%). One surface of a 12 μm thick positive electrode current collector (Al thin film) was coated with the positive electrode mixture slurry, dried, and roll-pressed to prepare a positive electrode.

A negative electrode active material (silicon-based active material, Si), a conductive agent (carbon black), and a binder (styrene butadiene rubber) were added to distilled water, which is a solvent, at a weight ratio of 70.0:20.3:9.7 to prepare a negative electrode mixture slurry (solid content: 26wt%). One surface of a15μm thick negative electrode current collector (Cu thin film) was coated with the negative electrode mixture slurry, dried, and roll-pressed to prepare a negative electrode.

In a dry room, a polyethylene porous film separator was interposed between the positive electrode and the negative electrode prepared above, and then the prepared non-aqueous electrolyte was injected thereto to prepare a secondary battery.

### Example 2

A non-aqueous electrolyte and a lithium secondary battery were prepared in the same manner as in Example 1 except that 0.5 wt% of the compound represented by Formula 1-1 above was added to the non-aqueous electrolyte instead of 2 wt%.

### Example 3

A non-aqueous electrolyte and a lithium secondary battery were prepared in the same manner as in Example 1 except that 5 wt% of the compound represented by Formula 1-1 above was added to the non-aqueous electrolyte instead of 2 wt%.

### Example 4

A non-aqueous electrolyte and a lithium secondary battery were prepared in the same manner as in Example 1 except that 2 wt% of the compound represented by Formula 1-9 above was added to the non-aqueous electrolyte instead of the compound represented by Formula 1-1 above.

### Comparative Example 1

A non-aqueous electrolyte and a lithium secondary battery were prepared in the same manner as in Example 1 except that the compound represented by Formula 1-1was not included.

**Comparative Example 2**

A non-aqueous electrolyte and a lithium secondary battery were prepared in the same manner as in Example 1 except that 2 wt% of the compound represented by Formula X above was added to the non-aqueous electrolyte instead of the compound represented by Formula 1-1 above.

[Formula X]

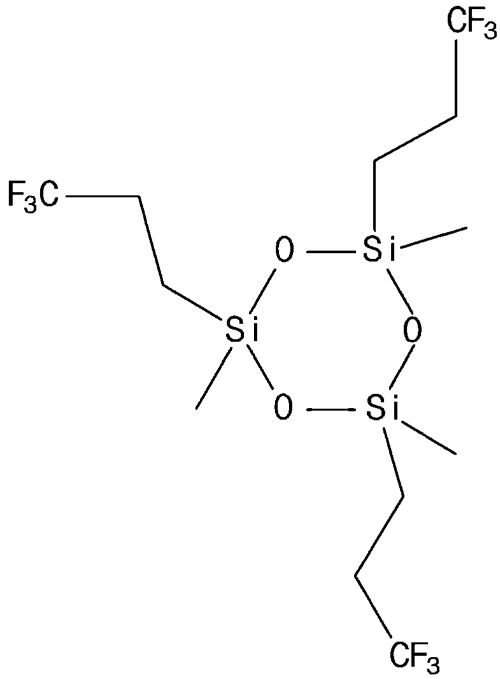

**Comparative Example 3**

A non-aqueous electrolyte and a lithium secondary battery were prepared in the same manner as in Example 1 except that 2 wt% of the compound represented by Formula Y was added to the non-aqueous electrolyte instead of the compound represented by Formula 1-1 above.

[Formula Y]

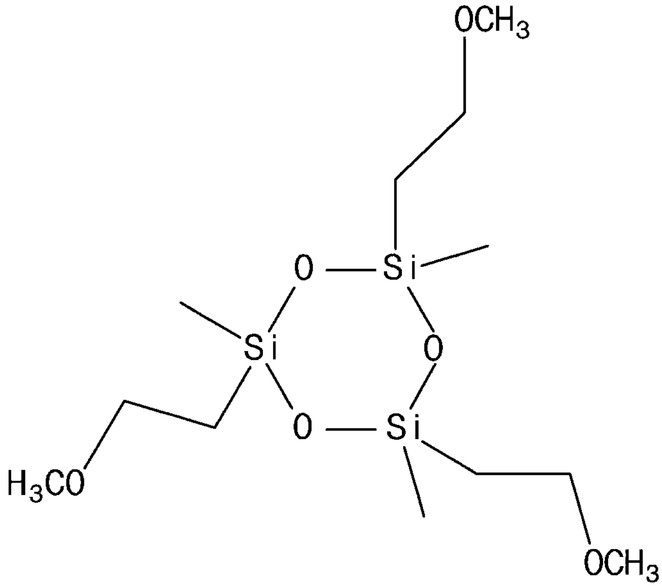

**Comparative Example 4**

A non-aqueous electrolyte and a lithium secondary battery were prepared in the same manner as in Example 1 except that 2 wt% of the compound represented by Formula Z was added to the non-aqueous electrolyte instead of the compound represented by Formula 1-1 above.

[Formula Z]

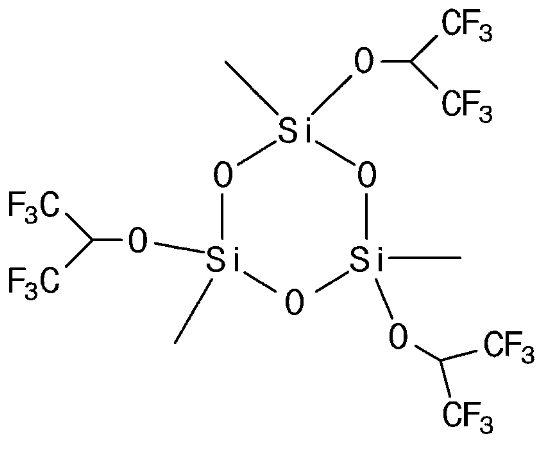

**Experimental Example**

**Experimental Example 1: Evaluation of High-temperature Cycle Performance**

The lithium secondary batteries prepared in Examples 1 to 4 and Comparative Examples 1 to 4 were charged to 4.2V at a current of 0.05C at 45°C using an electrochemical charger/discharger under CC/CV, 1C conditions, and were then discharged to 3.0V under CC, 0.5C conditions, which was set as one cycle. 200 cycles of charging/discharging were then performed.

The capacity retention rate was calculated by using the following equation, and the results are shown in Table 1 below.

Capacity retention rate (%) = (discharge capacity after 200 cycles/discharge capacity after one cycle) × 100

**Experimental Example 2: Evaluation of High-temperature Storage Performance**

The lithium secondary batteries prepared in Examples 1 to 4 and Comparative Examples 1 to 4 were charged to 4.2V at a current of 0.05C at 25°C under CC/CV, 0.33C conditions, and were then discharged to 2.5V at a current of 0.33C to perform initial charging/discharging. Afterwards, there were charged to 4.2V at a current of 0.05C under CC/CV, 0.33C conditions at 25°C, and were then stored at 60°C for 8 weeks.

After storage for 8 weeks, the above lithium secondary batteries were charged to 4.2V at a current of 0.05C at 25°C under a 0.33C condition, and were then discharged to 3.0V at a current of 0.33C. The capacity was then measured during the discharge.

The capacity retention rate was evaluated by using the following equation, and the results thereof are presented in Table 1 below.

Capacity retention rate (%) = (discharge capacity after 8-week storage / initial discharge capacity) × 100

[Table1]

| Examples | Experimental Example 1 | Experimental Example 2 |
|---|---|---|
| | Capacity retention rate (%, $200^{th}$ cycles) | Capacity increase rate (%, 60°C, 8-week storage) |
| Example 1 | 93.5 | 96.9 |
| Example 2 | 90.3 | 93.0 |
| Example 3 | 91.0 | 94.2 |
| Example 4 | 88.5 | 90.5 |
| Comparative Example 1 | 70.8 | 76.7 |
| Comparative Example 2 | 73.3 | 81.2 |
| Comparative Example 3 | 71.6 | 78.2 |
| Comparative Example 4 | 79.4 | 86.8 |

Referring to Table 1 above, it may be understood that the lithium secondary batteries of Examples 1 to 4,where the non-aqueous electrolyte according to the present disclosure was used, exhibited remarkably excellent capacity retention rates during cycle charge and discharge and storage at high temperatures compared to Comparative Examples 1 to 4, where the non-aqueous electrolyte according to the present disclosure was not used.

## Claims

1. A non-aqueous electrolyte comprising: a lithium salt, an organic solvent, and an additive, wherein the additive includes a compound represented by Formula 1 below:

[Formula 1]

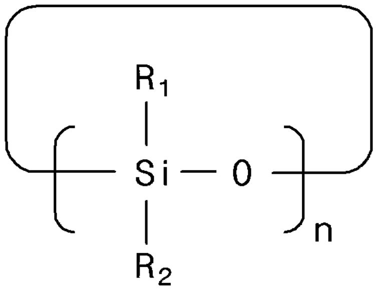

wherein, in Formula 1 above, $R_1$ and $R_2$ are each independently F, Br, Cl, I, a nitrile group, an ester group, an ether group, a ketone group, a carboxyl group, a substituted or unsubstituted alkyl group having 1 to 10 carbon atoms, a substituted or unsubstituted alkenyl group having 1 to 10 carbon atoms, a substituted or unsubstituted alkynyl group having 1 to 10 carbon atoms, a substituted or unsubstituted alkoxy group having 1 to 10 carbon atoms, a boron group, a borate group, an isocyanate group, an isothiocyanate group, a silyl group, a siloxane group, a sulfone group, a sulfonate group, a sulfate group, a substituent represented by the following Formula 2, or a combination of two or more thereof,
at least one of $R_1$ and $R_2$ includes a substituent represented by the following Formula 2, and
n is an integer of 3 to 8,

[Formula 2]

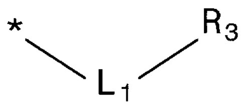

Wherein, in Formula 2 above, $L_1$ is an alkylene group having 1 to 10 carbon atoms, an ester group, a sulfone group, a sulfonate group, a sulfate group, or a combination of two or more thereof,
$R_3$ is an alkoxy group having 1 to 10 carbon atoms in which one or more fluorines are substituted, and
* is a binding site.

**2.** The non-aqueous electrolyte of claim 1, wherein in Formula 1 above, n is 3 or 4.

**3.** The non-aqueous electrolyte of claim 1, wherein $R_3$ includes one selected from the group consisting of $-OCF_3$, $-OCF_2CF_3$ and $-OCF_2CF_2CF_3$.

**4.** The non-aqueous electrolyte of claim 1, wherein $R_1$ includes a substituent represented by Formula 2 above, and $R_2$ does not include the substituent represented by Formula 2 above.

**5.** The non-aqueous electrolyte of claim 4, wherein $R_2$ is an alkyl group having 1 to 5 carbon atoms.

**6.** The non-aqueous electrolyte of claim 1, wherein the compound represented by Formula 1 above includes at least one selected from the group consisting of compounds represented by the following Formula 1-1, Formula 1-2, Formula 1-3, Formula 1-4, Formula 1-5, Formula 1-6, Formula 1-7, Formula 1-8, Formula 1-9, Formula 1-10, Formula 1-11 and Formula 1-12:

[Formula 1-1]

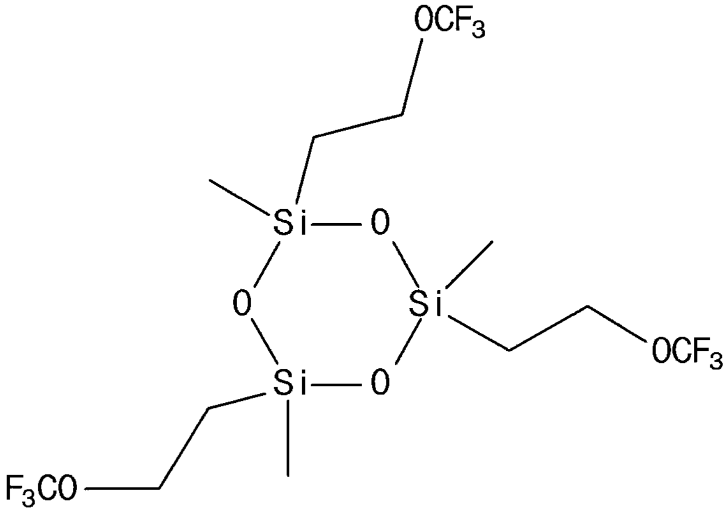

[Formula 1-2]

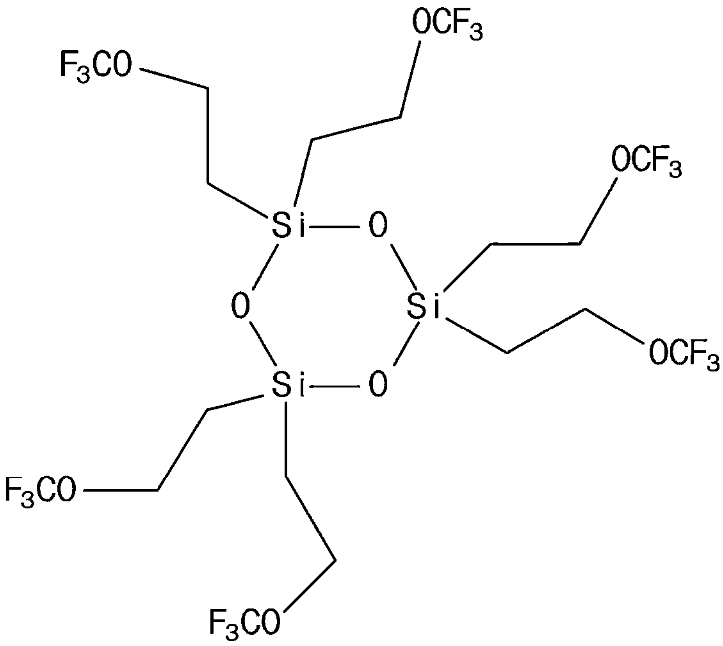

[Formula 1-3]

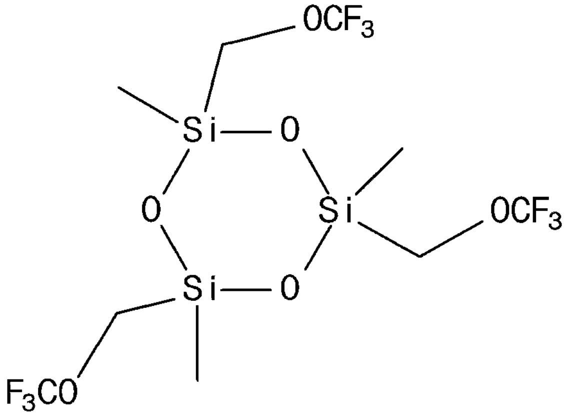

[Formula 1-4]

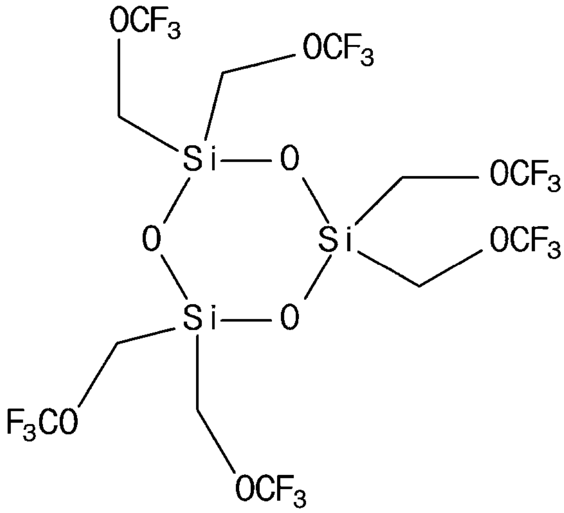

[Formula 1-5]

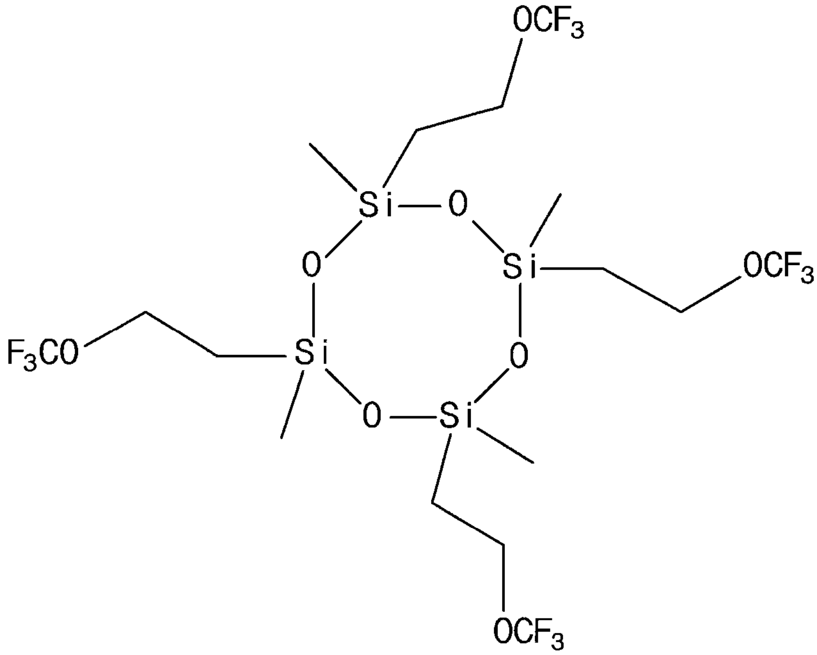

[Formula 1-6]

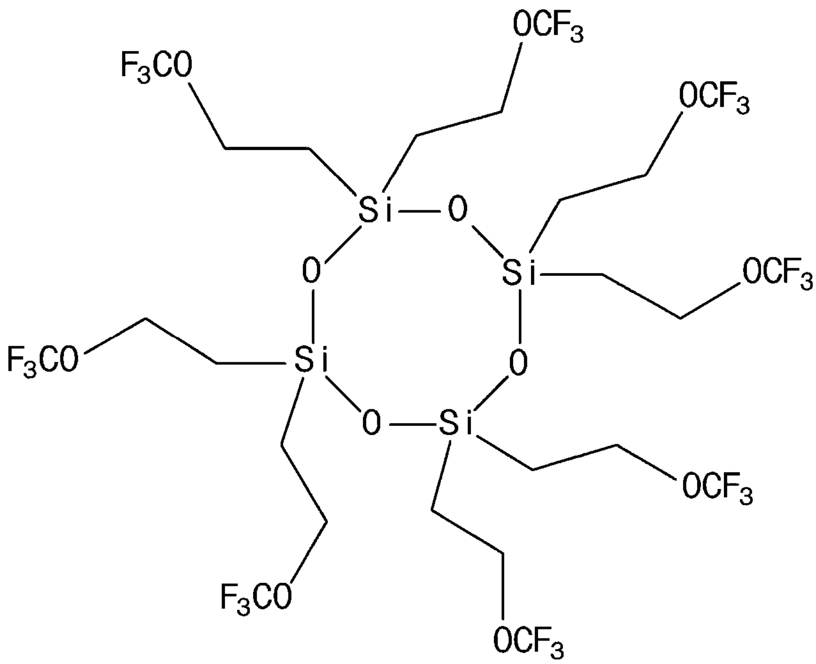

[Formula 1-7]

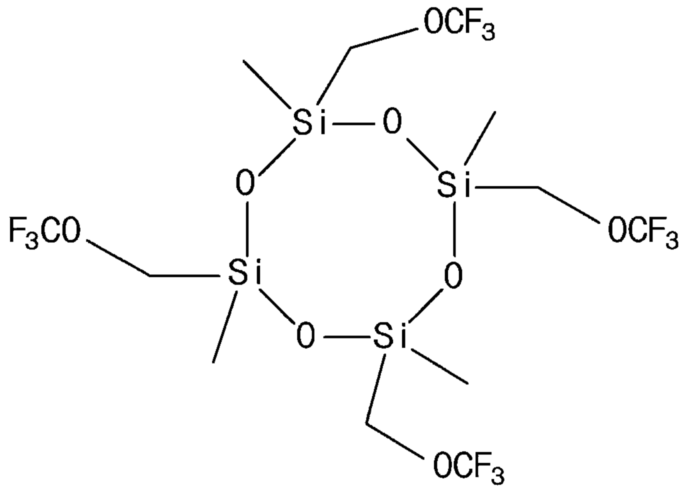

[Formula 1-8]

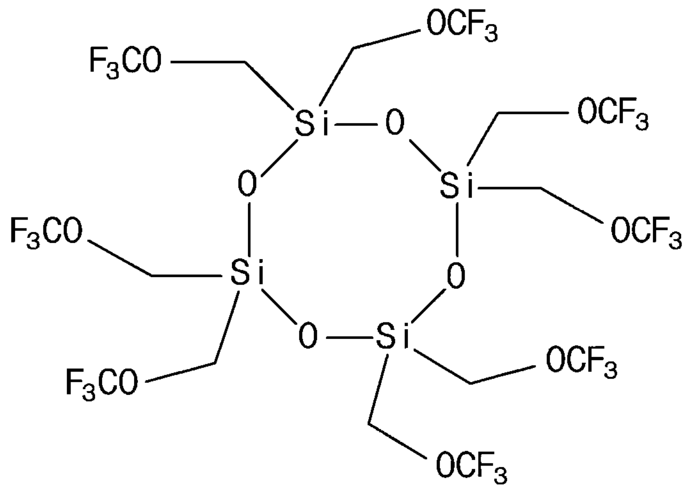

[Formula 1-9]

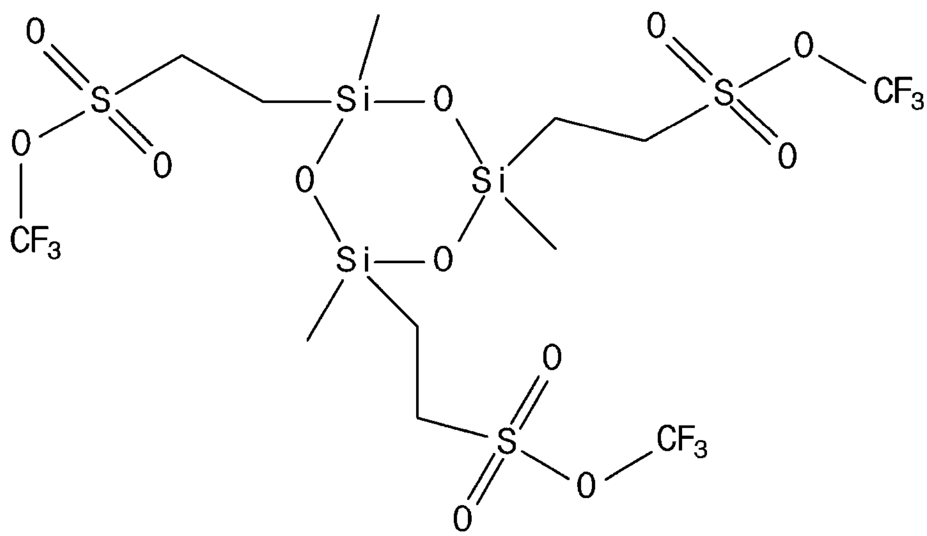

[Formula 1-10]

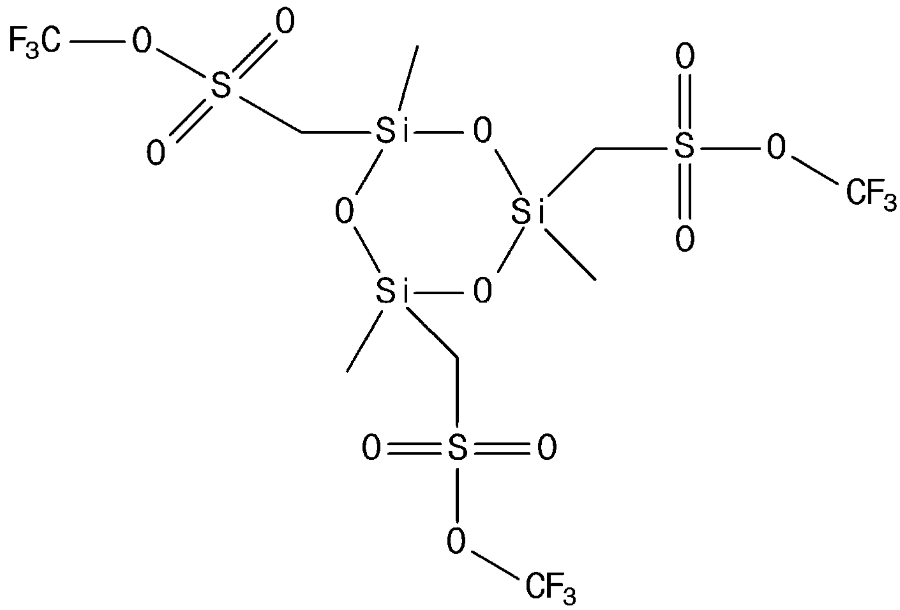

[Formula 1-11]

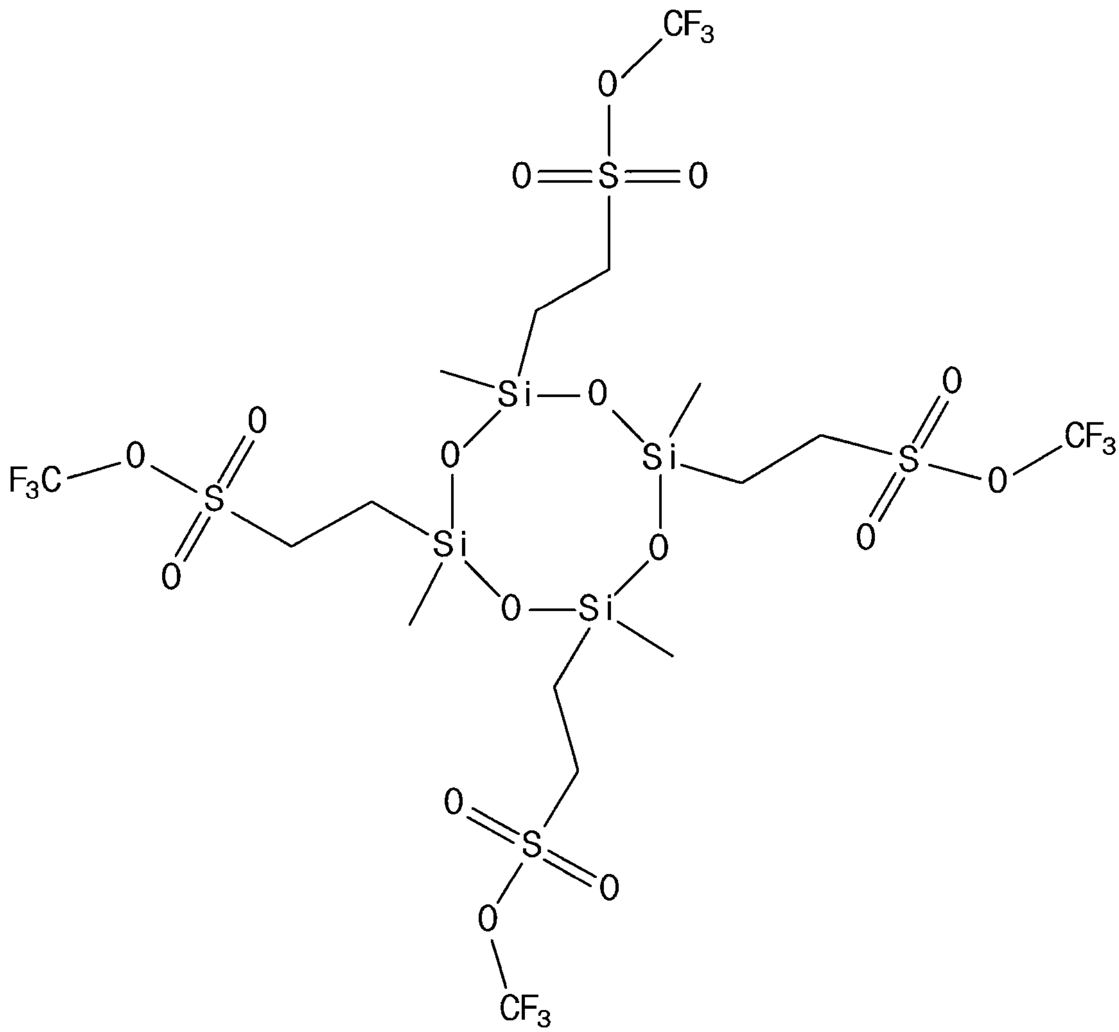

[Formula 1-12]

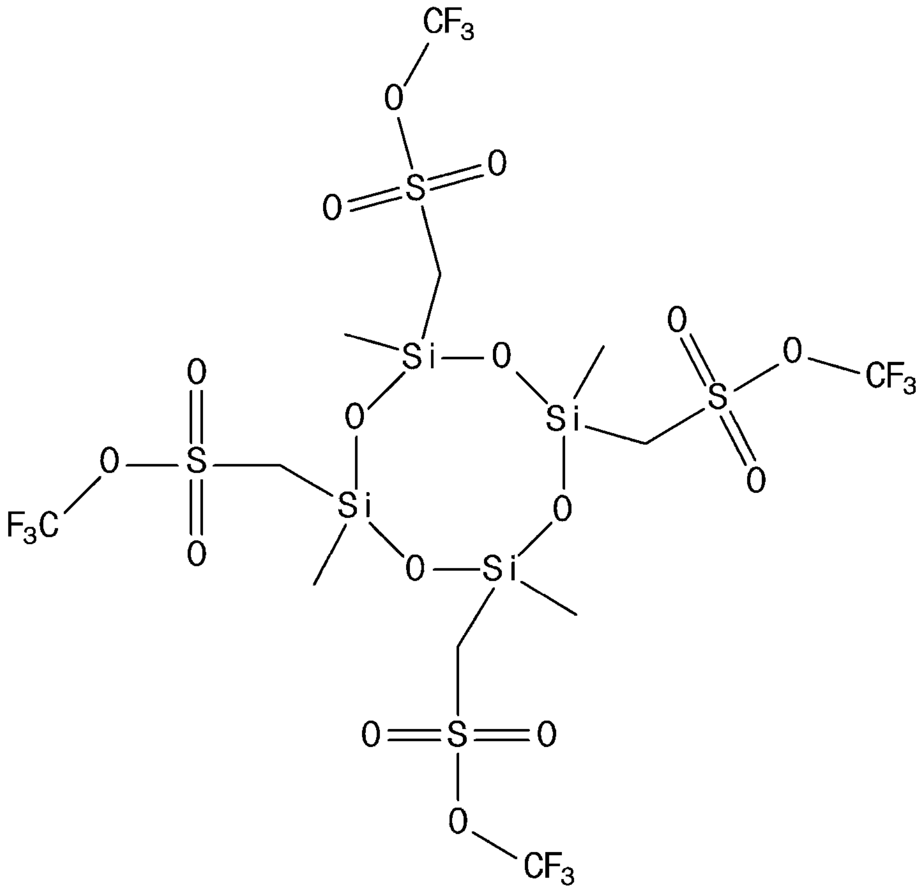

.

**7.** The non-aqueous electrolyte of claim 1, wherein the compound represented by Formula 1 above is included in an amount of 0.01 wt% to 10 wt% based on a weight of the non-aqueous electrolyte.

**8.** The non-aqueous electrolyte of claim 1, wherein the lithium salt includes at least one selected from the group consisting of LiCl, LiBr, LiI, $LiBF_4$, $LiClO_4$, $LiAlO_4$, $LiAlCl_4$, $LiPF_6$, $LiSbF_6$, $LiAsF_6$, $LiB_{10}Cl_{10}$, LiBOB($LiB(C_2O_4)_2$), $LiCF_3SO_3$, LiFSI($LiN(SO_2F)_2$), $LiCH_3SO_3$, $LiCF_3CO_2$, $LiCH_3CO_2$ and LiBETI($LiN(SO_2CF_2CF_3)_2$).

**9.** The non-aqueous electrolyte of claim 1, wherein the lithium salt is included at a molar concentration of 0.5 M to 5.0 M in the non-aqueous electrolyte.

**10.** The non-aqueous electrolyte of claim 1, wherein the organic solvent comprises at least one selected from the group consisting of a cyclic carbonate-based organic solvent, a linear carbonate-based organic solvent, a linear ester-based organic solvent and a cyclic ester-based organic solvent.

**11.** A lithium secondary battery comprising:

a negative electrode;
a positive electrode facing the negative electrode;
a separator disposed between the negative electrode and the positive electrode; and the non-aqueous electrolyte of claim 1.

**12.** The lithium secondary battery of claim 11, wherein the negative electrode includes a negative electrode active material, and the negative electrode active material includes a silicon-based active material.

## INTERNATIONAL SEARCH REPORT

International application No. **PCT/KR2024/005354**

### A. CLASSIFICATION OF SUBJECT MATTER

**H01M 10/0567**(2010.01)i; **H01M 10/0569**(2010.01)i; **H01M 4/38**(2006.01)i; **H01M 10/052**(2010.01)i; **H01M 4/134**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 10/0567(2010.01); H01M 10/052(2010.01); H01M 10/0525(2010.01); H01M 10/0568(2010.01); H01M 10/0569(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 리튬 이차전지(lithium secondary battery), 비수전해질(non-aqueous electrolyte), 첨가제(additive), 환형 실록산계 화합물(cyclic siloxane-based compound), 불화-알콕시기(fluoro-alkoxy group), 실리콘계 음극 활물질(silicon-based negative electrode active material)

### C. DOCUMENTS CONSIDERED TO BE RELEVANT

| Category* | Citation of document, with indication, where appropriate, of the relevant passages | Relevant to claim No. |
|---|---|---|
| X | US 2020-0203764 A1 (ENEVATE CORPORATION) 25 June 2020 (2020-06-25)<br>See claims 1 and 5; and paragraphs [0007], [0068], [0086], [0091]-[0093] and [0099]. | 1-12 |
| X | US 2015-0171475 A1 (CENTRAL GLASS COMPANY, LIMITED) 18 June 2015 (2015-06-18)<br>See claims 1-9; and paragraphs [0029], [0041] (Compound No. 31), [0052], [0055] and [0058]. | 1-12 |
| A | JP 6032504 B2 (TOYOTA JIDOSHA KABUSHIKI KAISHA) 30 November 2016 (2016-11-30)<br>See entire document. | 1-12 |
| A | KR 10-2015-0049301 A (SOULBRAIN CO., LTD.) 08 May 2015 (2015-05-08)<br>See entire document. | 1-12 |
| A | EP 3273519 A1 (ADEKA CORPORATION) 24 January 2018 (2018-01-24)<br>See entire document. | 1-12 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 July 2024** | **22 July 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**
**Information on patent family members**

International application No.
**PCT/KR2024/005354**

| Patent document cited in search report | Publication date (day/month/year) | Patent family member(s) | Publication date (day/month/year) |
|---|---|---|---|
| US 2020-0203764 A1 | 25 June 2020 | US 11165099 B2 | 02 November 2021 |
| | | US 2022-0052380 A1 | 17 February 2022 |
| | | WO 2020-132072 A1 | 25 June 2020 |
| US 2015-0171475 A1 | 18 June 2015 | CN 104380517 A | 25 February 2015 |
| | | CN 104380517 B | 02 January 2018 |
| | | EP 2851989 A1 | 25 March 2015 |
| | | EP 2863468 A1 | 22 April 2015 |
| | | EP 2863468 B1 | 09 August 2017 |
| | | JP 2015-005328 A | 08 January 2015 |
| | | JP 2015-005329 A | 08 January 2015 |
| | | JP 6221365 B2 | 01 November 2017 |
| | | JP 6255722 B2 | 10 January 2018 |
| | | KR 10-1650851 B1 | 24 August 2016 |
| | | KR 10-1707562 B1 | 16 February 2017 |
| | | KR 10-2015-0018565 A | 23 February 2015 |
| | | KR 10-2015-0020197 A | 25 February 2015 |
| | | TW 201405912 A | 01 February 2014 |
| | | TW 201407858 A | 16 February 2014 |
| | | TW I509861 B | 21 November 2015 |
| | | TW I511348 B | 01 December 2015 |
| | | US 2015-0118580 A1 | 30 April 2015 |
| | | WO 2013-187379 A1 | 19 December 2013 |
| | | WO 2013-187380 A1 | 19 December 2013 |
| JP 6032504 B2 | 30 November 2016 | CN 104471778 A | 25 March 2015 |
| | | JP 2016-013850 A1 | 30 June 2016 |
| | | KR 10-2015-0034261 A | 02 April 2015 |
| | | US 2015-0188141 A1 | 02 July 2015 |
| | | US 9793547 B2 | 17 October 2017 |
| | | WO 2014-013850 A1 | 23 January 2014 |
| | | WO 2014-013850 A1 | 30 June 2016 |
| KR 10-2015-0049301 A | 08 May 2015 | None | |
| EP 3273519 A1 | 24 January 2018 | CN 107210489 A | 26 September 2017 |
| | | CN 107210489 B | 20 March 2020 |
| | | EP 3273519 A4 | 03 October 2018 |
| | | EP 3273519 B1 | 04 December 2019 |
| | | JP 6713452 B2 | 24 June 2020 |
| | | KR 10-2017-0128218 A | 22 November 2017 |
| | | TW 201642513 A | 01 December 2016 |
| | | TW I674693 B | 11 October 2019 |
| | | US 10388989 B2 | 20 August 2019 |
| | | US 2018-0026304 A1 | 25 January 2018 |
| | | WO 2016-147872 A1 | 22 September 2016 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020230052976